# EUROPÄISCHE PATENTSCHRIFT

(11) **EP 1 615 960 B1**
(45) Veröffentlichungstag und Bekanntmachung des Hinweises auf die Patenterteilung: **16.08.2006**
(21) Anmeldenummer: 04726959.2
(22) Anmeldetag: 13.04.2004
(51) Int. Cl.: C08F 6/00

(54) **VERFAHREN ZUR REDUZIERUNG DER RESTMONOMERENMENGE IN WÄSSRIGEN POLYMERDISPERSIONEN**
METHOD FOR THE REDUCTION OF THE RESIDUAL MONOMER CONTENT IN AQUEOUS POLYMER DISPERSIONS
PROCEDE DE REDUCTION DE LA QUANTITE DE MONOMERE RESIDUELLE DANS DES DISPERSIONS POLYMERES AQUEUSES

(30) Priorität: 15.04.2003 DE 10317434
(43) Veröffentlichungstag der Anmeldung: 18.01.2006
(73) Patentinhaber: BASF Aktiengesellschaft, 67056 Ludwigshafen (DE)
(72) Erfinder: CHOWDHRY, Mubarik, Mahmood, 67056 Ludwigshafen (DE); GASCHLER, Wolfgang, 69126 Heidelberg (DE)
(86) Internationale Anmeldenummer: PCT/EP2004/003848
(87) Internationale Veröffentlichungsnummer: WO 2004/092226

(56) Entgegenhaltungen:
- DE-A- 3 834 734
- DE-A- 19 840 586
- US-B1- 6 444 785

## Beschreibung

Die Erfindung betrifft ein Verfahren zur Reduzierung der Restmonomerenmenge in wässrigen Polymerdispersionen durch chemische Nachbehandlung mit einem speziellen Katalysatorsystem.

Wässrige Polymerdispersionen enthalten nach ihrer Herstellung durch radikalisch initiierte Polymerisation oder Copolymerisation von ethylenisch ungesättigten Monomeren neben einem Polymer-Feststoffanteil von 30 bis 75 Gew.-% aufgrund der unvollständigen Polymerisation der eingesetzten ethylenisch ungesättigten Monomeren in der radikalischen Hauptpolymerisation, die meist bis zu einem Monomerenumsatz von 95 und bevorzugt von 98 bis 99 Gew.-% geführt wird, noch einen unerwünschten Anteil an nichtpolymerisierten freien ethylenisch ungesättigten Monomeren ("Restmonomere"). Aus meist toxikologischen Gründen fordert der Markt wässrige Polymersysteme mit einem niedrigen Gehalt an Restmonomeren bei gleichbleibenden Verarbeitungs- und Anwendungseigenschaften.

Neben nichtchemischen Methoden, wie Inertgas- oder Dampfstrippung, stehen unterschiedlichste chemische Methoden, wie beispielsweise in EP-B 003 957, EP-B 028 348, EP-B 563 726, EP-A 764 699, US-A 4 529 753, DE-A 37 18 520, DE-A 42 32 194, DE-A 195 29 599 beschrieben, zur Absenkung von Restmonomerengehalten wässriger Polymerdispersionen zur Verfügung.

Beispielsweise wird in der DE-A 38 34 734 u. a. die Restmonomerenentfernung mittels eines eisen- und vanadiumsalzhaltigen Redoxinitiatorsystems offenbart. Als Oxidationsmittel werden Acylperoxide, Hydroperoxide sowie Sauerstoff abgebende Mittel ohne Peroxidstruktur und als Reduktionsmittel Sulfinsäuren sowie reduzierende Zucker genannt.

Für den Einsatz von Carbonylverbindungen bzw. deren Umsetzungsprodukten in der Nachbehandlung von wässrigen Polymerdispersionen muss von folgendem Stand der Technik ausgegangen werden.

Gemäß WO 95/33775 können zur Nachbehandlung von wässrigen Polymerdispersionen Redoxsysteme eingesetzt werden, deren Reduktionsmittel ein Addukt aus Hydrogensulfitanion und einem Keton mit 3 bis 8 C-Atomen und/oder die konjugierte Säure dieses Addukts umfasst. Die Nachbehandlung wird in Anwesenheit von im wässrigen Medium löslichen Metallverbindungen vorgenommen.

Die EP-A 767 180 empfiehlt für die Reduktion von Restmonomerengehalten ein Redox-Initiatorsystem aus organischen Hydroperoxiden, die nicht oder nur sehr schlecht in Wasser löslich sind und u.a. Addukten aus Aldeyhyden mit einer C-Kette mit 4 bis 6 C-Atomen und Bisulfiten.

Die DE-A 19741187 offenbart zur chemischen Restmonomerenentfernung ein System, bestehend aus einem Oxidationsmittel und einer organischen α-Hydroxycarbonsäure.

In der DE-A 19839199 wird der Einsatz von Oxidationsmitteln in Kombination mit einem System, bestehend aus einem Aldehyd und einem anorganischen Dithionit, zur Abreicherung von Restmonomeren empfohlen.

Gemäß DE-A19840586 können zur Nachbehandlung von wässrigen Polymerdispersionen Redoxsysteme eingesetzt werden, welche aus Wasserstoffperoxid bzw. einem Hydroperoxid und einer α-Hydroxycarbonylverbindung aufgebaut sind.

Der vorliegenden Erfindung lag die Aufgabe zugrunde, ein neues wirksames Verfahren zur Reduzierung der Restmonomerenmenge in wässrigen Polymerdispersionen bereitzustellen, bei welchem sich insbesondere die organischen Komponenten im Anschluss an die Restmonomerenentfernung in einfacher Weise wieder aus der wässrigen Polymerdispersion entfernen lassen.

Es wurde nun gefunden, dass sich die Menge an Restmonomeren in wässrigen Polymerdispersionen wirksam reduzieren lässt, wenn man die Nachbehandlung der Restmonomere enthaltenden wässrigen Polymerdispersionen unter Zugabe eines Initiatorensystems durchführt, das im wesentlichen
a) 0,001 bis 5 Gew.-%, bezogen auf die zur Herstellung der Polymerdispersion verwendeten Gesamtmonomerenmenge eines anorganischen Salzes der Perschwefelsäure,
b) 0,005 bis 5 Gew.-%, bezogen auf die zur Herstellung der Polymerdispersion verwendeten Gesamtmonomerenmenge eines Methylketons der allgemeinen Formel R¹-C(=O)-CH₃ worin R¹ eine Methyl-, Ethyl-, n-Propyl, iso-Propyl-, n-Butyl-oder tert.-Butylgruppe ist, und
c) optional katalytische Mengen eines Metallions, das in mehreren Wertigkeitsstufen auftreten kann
umfaßt.

Als anorganische Salze der Perschwefelsäure sind prinzipiell alle Salze geeignet, welche in wässrigen Systemen eine Löslichkeit> 10 g/l aufweisen. Besonders bevorzugt sind jedoch Ammonium-, Kalium- und/oder Natriumpersulfat. Selbstverständlich ist es auch möglich, Gemische vorgenannter Verbindungen einzusetzen.

Die Menge an zugesetztem anorganischen Persulfat liegt üblicherweise im Bereich von 0,001 bis 5 Gew.-%, oft bei 0,002 bis 3 Gew.-% bzw. bei 0,003 bis 2 Gew.-%, häufig bei 0,01 bis 1,5 Gew.-% oder bei 0,02 bis 1 Gew.-%, jeweils bezogen auf die zur Polymerisation eingesetzte Gesamtmonomerenmenge.

Die Menge an zugesetztem Methylketon liegt im Bereich von 0,005 bis 5 Gew.-%, häufig bei 0,01 bis 3 Gew.-% oder bei 0,03 bis 2 Gew.-% und oft bei 0,05 bis 1 Gew.-%, jeweils bezogen auf die zur Polymerisation eingesetzte Gesamtmonomerenmenge.

Die optional einsetzbaren Metallverbindungen sind für die Nachbehandlung vorteilhaft. Sie sind üblicherweise vollständig im wässrigen Medium der Polymerdispersion löslich und deren metallische Komponente darüber hinaus in der Lage, in mehreren Wertigkeitsstufen vorliegen zu können. Die gelösten Metallionen wirken katalytisch und unterstützen möglicherweise Elektronenübertragungsreaktionen zwischen den anorganischen Persulfaten und den Methylketonen. Als gelöste Metallionen kommen prinzipiell beispielsweise Eisen-, Kupfer-, Mangan-, Vanadin-, Nickel-, Cobalt-, Titan-, Cer-, Chrom- und/oder Silberionen in Betracht. Selbstverständlich ist es auch möglich, Gemische verschiedener, sich nicht störender Metallionen, wie beispielsweise das System Fe^{2/3+}/ VSO₄⁻, zu verwenden. Bevorzugt werden Eisen- und/oder Silberionen eingesetzt. Von Vorteil ist, dass bei Verwendung von Silberionen die wässrige Polymerdispersion darüber hinaus noch mit antibakteriellen Eigenschaften ausgestattet wird.

Die gelösten Metallionen werden in katalytischen Mengen, üblicherweise im Bereich von 1 bis 1000 ppm, oft von 5 bis 500 ppm und häufig von 10 bis 100 ppm, jeweils bezogen auf die zur Polymerisation verwendete Gesamtmonomerenmenge eingesetzt. Vorteilhaft ist es, wenn die Hauptmenge, d.h. ≥ 50 Gew.-%, ≥ 60 Gew.-%, ≥ 70 Gew.-%, ≥ 80 Gew.-%, ≥ 90 Gew.-% oder sogar die Gesamtmenge der Metallionen der wässrigen Polymerdispersion vor dem Initiatorsystem, bestehend aus Persulfat und Methylketon, zugegeben werden.

Die Komponenten des erfindungsgemäß verwendeten Initiatorsystems werden zweckmäßigerweise zur Nachbehandlung der auf ca. 50 bis 130, bevorzugt 60 bis 120 und besonders bevorzugt auf 80 bis 100 °C erhitzten wässrigen Polymerdispersion bevorzugt bei Normaldruck, gegebenenfalls aber auch bei einem Druck von größer oder kleiner 1 bar (absolut), unter Rühren allmählich gleichzeitig oder nacheinander zudosiert, wobei im letzten Fall bevorzugt zuerst das Persulfat zugesetzt wird. Besonders günstig ist das gleichzeitige Zudosieren von Persulfat und Methylketon über zwei separate Zuläufe. Dabei kann die Zugabe der Initiatorkomponenten beispielsweise von oben, unten oder durch die Seite des Reaktors erfolgen. Bevorzugt wird das Initiatorsystem jedoch von unten dosiert. Da die optimale Dauer der Initiatorzudosierung von der Monomerenzusammensetzung, der Größe des Reaktionsansatzes und der Reaktorgeometrie abhängig ist, ist es zweckmäßig, diese in Vorversuchen zu ermitteln. Abhängig von der gestellten Aufgabe, kann die Dauer der Initiatorzugabe wenige Sekunden oder mehrere Stunden betragen.

Die Nachbehandlung wird üblicherweise bei einem pH-Wert ≤ 10 durchgeführt. Zur pH-Einstellung der Polymerdispersion können prinzipiell Basen, wie beispielsweise Natronlauge, Ammoniakwasser oder Triethanolamin etc. verwendet werden. Für die Nachbehandlung der Polymerdispersion ist ein pH-Bereich von ≥ 2 und ≤ 10 günstig, bevorzugt ist jedoch ein pH-Bereich zwischen ≥ 6 und ≤ 8, und bei wässrigen XSB-Dispersionen häufig ≥ 2 und ≤ 5. Bei der pH-Einstellung mit Basen könnten jedoch die katalysierenden Metallionen in schwerlösliche Hydroxide oder Hydroxo-Komplexe überführt werden. Zur Sicherstellung ausreichender Metallionen-Konzentrationen während der Nachbehandlung ist daher der Zusatz von Komplexierungsmitteln, wie beispielsweise Ethylendiamintetraessigsäure, Nitrilotriessigsäure und Diethylentriaminpentaessigsäure und/oder deren jeweiliger Natriumsalze und/oder die Verwendung von stabilen Metallionenkomplexen, wie beispielsweise Eisen-(III)/Natrium-Ethylendiamintetraacetat von Vorteil.

Das erfindungsgemäße Verfahren eignet sich besonders zur Verminderung der Restmonomerenmenge in wässrigen Polymerdispersionen, die durch radikalische Emulsionspolymerisation von wenigstens eine ethylenisch ungesättigte Gruppe aufweisenden Monomeren erhältlich sind.

Als wenigstens eine monoethylenisch ungesättigte Gruppe aufweisende Monomere kommen für das erfindungsgemäße Verfahren u.a. insbesondere in einfacher Weise radikalisch polymerisierbare Monomere in Betracht wie beispielsweise die Olefine. Ethylen, vinylaromatische Monomere wie Styrol, α-Methylstyrol, o-Chlorstyrol oder Vinyltoluole, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen wie besonders Acrylsäure- und Methacrylsäuremethyl-, -ethyl-, -n-butyl-, -iso-butyl und -2-ethylhexylester, Maleinsäuredimethylester oder Maleinsäure-di-n-butylester, Nitrile α,β-monoethylenisch ungesättigter Carbonsäuren, wie Acrylnitril sowie C₄₋₈-konjugierte Diene wie 1,3-Butadien und Isopren. Die genannten Monomere bilden im Fall von ausschließlich nach der Methode der radikalischen wässrigen Emulsionspolymerisation erzeugten wässrigen Polymerdispersionen in der Regel die Hauptmonomeren, die, bezogen auf die Gesamtmenge der nach dem Verfahren der radikalischen wässrigen Emulsionspolymerisation zu polymerisierenden Monomeren normalerweise einen Anteil von mehr als 50 Gew.-% auf sich vereinen. In aller Regel weisen diese Monomeren in Wasser bei Normalbedingungen (25 °C, 1 atm) lediglich eine mäßige bis geringe Löslichkeit auf.

Monomere, die unter den vorgenannten Bedingungen eine erhöhte Wasserlöslichkeit aufweisen, sind beispielsweise α,β-monoethylenisch ungesättigte Mono- und Dicarbonsäuren und deren Amide wie z.B. Acrylsäure, Methacrylsäure, Maleinsäure, Fumarsäure, Itaconsäure, Acrylamid und Methacrylamid, ferner Vinylsulfonsäure und deren wasserlösliche Salze sowie N-Vinylpyrrolidon.

Im Fall von ausschließlich nach der.Methode der radikalischen wässrigen Emulsionspolymerisation erzeugten wässrigen Polymerdispersionen werden die vorgenannten, eine erhöhte Wasserlöslichkeit aufweisenden Monomeren im Normalfall lediglich als modifizierende Monomere in Mengen, bezogen auf die Gesamtmenge der zu polymerisierenden Monomeren, von weniger als 50 Gew.-%, in der Regel 0,5 bis 20, vorzugsweise 1 bis 10 Gew.-% einpolymerisiert.

Monomere, die üblicherweise die innere Festigkeit der Verfilmungen der wässrigen Polymerdispersionen erhöhen, weisen normalerweise wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind N-Alkylolamide von 3 bis 10 C-Atome aufweisenden α,β-monoethylenisch ungesättigten Carbonsäuren, unter denen das N-Methylolacrylamid und das N-Methylolmethacrylamid ganz besonders bevorzugt sind sowie deren Ester mit 1 bis 4 C-Atomen aufweisenden Alkanolen. Daneben kommen auch zwei Vinylreste aufweisende Monomere, zwei Vinylidenreste aufweisende Monomere sowie zwei Alkenylreste aufweisende Monomere in Betracht. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und - dimethacrylate wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylate sowie Divinylbenzol, Vinylmethacrylat, Vinylacrylat, Allylmethacrylat, Allylacrylat, Diallymaleat, Diallylfumarat, Methylenbisacrylamid, Cyclopentadienylacrylat oder Triallylcyanurat. In diesem Zusammenhang von besonderer Bedeutung sind auch die Methacrylsäure- und Acrylsäure-C₁-C₈-Hydroxyalkylester wie n-Hydroxyethyl-, n-Hydroxypropyl- oder n-Hydroxybutylacrylat und -methacrylat sowie Verbindungen, wie Diacetonacrylamid und Acetylacetoxyethylacrylat bzw. -methacrylat. Die vorgenannten Monomeren werden im Fall von ausschließlich nach der Methode der radikalischen wässrigen Emulsionspolymerisation erzeugten wässrigen Polymerdispersionen, bezogen auf die Gesamtmenge der zu polymerisierenden Monomeren, meist in Mengen von 0,5 bis 10 Gew.-% einpolymerisiert.

Die Herstellung wässriger Polymerdispersionen ist vielfach vorbeschrieben und dem Fachmann daher hinreichend bekannt [vgl. z.B. Encyclopedia of Polymer Science and Engineering, Vol. 8, S. 659ff (1987); D.C. Blackley, in High Polymer Latices, Vol. 1, S. 35ff (1966); Emulsion Polymerisation, Interscience Publishers, New York (1965) und Dispersionen synthetischer Hochpolymerer, F. Hölscher, Springer-Verlag, Berlin (1969)]. Sie erfolgt durch Emulsionspolymerisation von wenigstens eine ethylenisch ungesättigte Gruppe aufweisenden Monomeren in Gegenwart eines bevorzugt wasserlöslichen Polymerisationsinitiators sowie in Gegenwart von Emulgatoren und ggf. Schutzkolloiden und üblichen weiteren Zusatzstoffen. In der Regel erfolgt hierbei der Zusatz der Monomeren durch kontinuierlichen Zulauf. Als Initiator ist die Verwendung von Peroxodischwefelsäure und/oder deren Salzen in Mengen von 0,1 bis 2 Gew.-%, bezogen auf die Gesamtmenge der Monomeren, bevorzugt. Die Polymerisationstemperatur beträgt im allgemeinen 20 bis 150 und bevorzugt 60 bis 120 °C. Die Polymerisation findet ggf. unter Druck statt. Als Emulgatoren werden insbesondere anionische Emulgatoren allein oder im Gemisch mit nichtionischen Dispergiermitteln in einer Menge von insbesondere 0,5 bis 6 Gew.-% der Gesamtmonomerenmenge eingesetzt.

Die erfindungsgemäße Nachbehandlung der wässrigen Polymerdispersion zur Reduzierung der Restmonomerenmenge erfolgt insbesondere, nachdem die Gesamtmonomerenmenge in der radikalischen Emulsionspolymerisation zu mindestens 95 und bevorzugt jedoch zu mindestens 98 bis 99 Gew.-% umgesetzt wurde. Die Verhältnisse bei der Hauptpolymerisation und bei der Nachbehandlung sind im allgemeinen verschieden. So erfolgt während der Hauptpolymerisation bei hoher Konzentration an Monomeren und wachsenden und somit immer hydrophober werdenden Oligomerradikalen der Radikaleintritt in die Dispersionspartikel leicht, während dieser bei der Nachbehandlung generell aufgrund der geringen Monomerkonzentration und mangels wachsender Oligomerradikale sehr schwierig verläuft. Bei der Herstellung von wässrigen Polymerdispersionen sind daher in der Regel für die Hauptpolymerisation und die Nachbehandlung unterschiedliche Initiatorensysteme erforderlich.

Wie die Verfahren der radikalischen Polymerisation generell, erfolgt auch das erfindungsgemäße Verfahren in der Regel unter Inertgasatmosphäre (z.B. Stickstoff oder Argon).

Selbstverständlich ist es möglich, die nachbehandelnden wässrigen Polymerdispersionen einer Inertgas- und/oder Wasserdampfstrippung zuzuführen, wo sich insbesondere die zur Reaktion eingesetzten Methylketone in einfacher Weise abtrennen lassen.

Die erfindungsgemäß einzusetzenden Initiatorsysteme ermöglichen eine wirksame Restmonomerenabsenkung in relativ kurzer Zeit. Von Vorteil ist, dass die verwendeten Methylketone einfach zugängliche chemische Verbindungen sind. Auch lassen sich die zur Restmonomerenentfernung eingesetzten Methylketone in der Regel in einfacher Weise durch Inertgas- und/oder Wasserdampfstrippung aus den wässrigen Polymerdispersionen entfernen. Ferner ist von Bedeutung, dass das erfindungsgemäß eingesetzte Methylketon in der Regel die Komponenten der wässrigen Polymerdispersionen nicht stört, weshalb eine Anwendung desselben im Überschuss die diesbezügliche Qualität der wässrigen Polymerdispersion nicht mindert, selbst wenn es nach der Nachbehandlung nicht durch Inertgas- und/oder Wasserdampfstrippung abgetrennt wird. Von Vorteil ist weiterhin, dass insbesondere bei Verwendung von Silberionen die wässrige Polymerdispersion darüber hinaus vor bakteriellem Befall geschützt wird und daher der wässrigen Polymerdispersion keine weiteren bzw. deutlich weniger Konservierungsstoffe zugesetzt werden müssen.

### Beispiele

### Beispiel 1

Eine Styrol/n-Butylacrylat-Dispersion, durch radikalische Polymerisation aus 23 kg Styrol, 25 kg n-Butylacrylat, 2 kg Acrylsäure, 1,2 kg einer 34 gew.-%igen wässrigen Styrol-Saatlatex-Dispersion (Teilchengröße ca. 30 bis 35 nm), 300 g einer 15 gew.-%igen Lösung von Natriumlaurylsulfat in entionisiertem Wasser, 500 g einer 45 gew.-%igen Lösung von Dowfax® 2A1-Lösung (Dodecylphenoxybenzol-disulfonsäurenatriumsalz) in entionisiertem Wasser, 300 g einer 25 gew.-%igen Lösung von Natriumhydroxyd in entionisiertem Wasser, 150 g einer 36 gew.-%igen Lösung von Natriumperoxodisulfat in entionisiertem Wasser und 46 kg entionisiertem Wasser bei 80 °C hergestellt, wies einen Feststoffgehalt von 52 Gew.-% und einen pH-Wert von 4,3 auf.

In der Nachbehandlung setzte man 1500 g dieser auf 20 bis 25 °C (Raumtemperatur) abgekühlten wässrigen Dispersion unter Stickstoffatmosphäre ein, gab solange eine 25 gew.-%ige Lösung von Natriumhydroxyd in entionisiertem Wasser zu bis ein pH-Wert von 6,5 erhalten wurde. Danach versetzte die wässrige Polymerdispersion mit 2,0 g einer 1 gew.-%igen Lösung von Silbernitrat in entionisiertem Wasser und erhitzte die so erhaltene wässrige Dispersion auf 90 °C. Unter Rühren wurden anschließend gleichzeitig beginnend
a) 25 g einer 23 gew.-%igen Lösung von Natriumpersulfat in entionisiertem Wasser
   und
b) 25 g einer 20 gew.-%igen Lösung von Aceton in entionisiertem Wasser
über zwei getrennte Zuläufe mit einer Zulaufgeschwindigkeit von jeweils 12,5 g pro Stunde in die wässrige Polymerdispersion eindosiert. Anschließend ließ man noch eine Stunde bei dieser Temperatur nachreagieren. Danach kühlte man die wässrige Dispersion auf Raumtemperatur ab und ermittelte die Restmonomerenmengen. Die dabei resultierenden n-Butylacrylat- und Styrol-Restmengen wurden gaschromatographisch, die Acrylsäure-Restmengen mittels HPLC bestimmt. Die in der Nachbehandlung erhaltenen Ergebnisse sind in Tabelle 1 dargestellt.

**Tabelle 1: Restmonomerenmengen der wässrigen Polymerdispersion in der Nachbehandlung**

| Zeit Min | Styrol ppm | n-Butylacrylat ppm | Acrylsäure ppm |
|---|---|---|---|
| 0 | 2930 | 13150 | 3450 |
| 60 | 70 | 1900 | 1930 |
| 120 | 60 | 1200 | 940 |
| 180 | 60 | 990 | 890 |

### Beispiel 2

In der Nachbehandlung setzte man 1500 g der im Beispiel 1 hergestellten wässrigen Dispersion unter Stickstoffatmosphäre ein, gab bei Raumtemperatur solange eine 25 gew.-%ige Lösung von Natriumhydroxyd in entionisiertem Wasser zu bis ein pH-Wert von 6,5 erhalten wurde und erhitzte die so erhaltene wässrige Dispersion auf 90 °C. Unter Rühren wurden anschließend gleichzeitig beginnend
a) 25 g einer 23 gew.-%igen Lösung von Natriumpersulfat in entionisiertem Wasser
   und
b) 25 g einer 20 gew.-%igen Lösung von Aceton in entionisiertem Wasser
über zwei getrennte Zuläufe mit einer Zulaufgeschwindigkeit von jeweils 12,5 g pro Stunde in die wässrige Polymerdispersion eindosiert. Danach ließ man noch eine Stunde bei dieser Temperatur nachreagieren. Anschließend kühlte man die wässrige Dispersion auf Raumtemperatur ab und ermittelte die Restmonomerenmengen. Die durch die Nachbehandlung erhaltenen Ergebnisse sind in Tabelle 2 aufgelistet.

**Tabelle 2: Restmonomerenmengen der wässrigen Polymerdispersion in der Nachbehandlung**

| Zeit Min | Styrol ppm | n-Butylacrylat ppm | Acrylsäure ppm |
|---|---|---|---|
| 0 | 2950 | 13130 | 3410 |
| 60 | 570 | 2940 | 1970 |
| 120 | 260 | 1510 | 1040 |
| 180 | 100 | 1010 | 910 |

### Vergleichsbeispiel

In der Nachbehandlung setzte man 1500 g der im Beispiel 1 hergestellten wässrigen Dispersion unter Stickstoffatmosphäre ein, gab solange eine 25 gew.-%ige Lösung von Natriumhydroxyd in entionisiertem Wasser zu bis ein pH-Wert von 6,5 erhalten wurde und erhitzte die so erhaltene wässrige Dispersion auf 90 °C. Unter Rühren wurden anschließend gleichzeitig beginnend
a) 25 g einer 25 gew.%igen Lösung von tert.-Butylhydroperoxid in entionisiertem Wasser
   und
b) 25 g einer wässrigen Lösung, bestehend aus 3,0 g Natriumbisulfit (Na₂S₂O₅), 2,0 g Aceton und 20 g entionisiertem Wasser
über zwei getrennte Zuläufe mit einer Zulaufgeschwindigkeit von jeweils 12,5 g pro Stunde in die wässrige Polymerdispersion eindosiert. Anschließend ließ man noch eine Stunde bei dieser Temperatur nachreagieren. Danach kühlte man die wässrige Dispersion auf Raumtemperatur ab und ermittelte die Restmonomerenmengen. Die durch die Nachbehandlung erhaltenen Ergebnisse sind in Tabelle 3 aufgeführt.

**Tabelle 3: Restmonomerenmengen der wässrigen Polymerdispersion in der Nachbehandlung**

| Zeit Min | Styrol ppm | n-Butylacrylat ppm | Acrylsäure ppm |
|---|---|---|---|
| 0 | 2950 | 13030 | 3410 |
| 60 | 940 | 3120 | 2140 |
| 120 | 170 | 1820 | 1230 |
| 180 | 110 | 1150 | 900 |

## Patentansprüche

1. Verfahren zur Reduzierung der Restmonomerenmenge in wässrigen Polymerdispersionen durch Nachbehandlung mit einem Initiatorsystem, **dadurch gekennzeichnet, dass** man die Nachbehandlung der wässrigen Polymerdispersion unter Zugabe eines Initiatorensystems durchführt, das im wesentlichen
a) 0,001 bis 5 Gew.-%, bezogen auf die zur Herstellung der Polymerdispersion verwendeten Gesamtmonomerenmenge eines anorganischen Salzes der Perschwefelsäure,
b) 0,005 bis 5 Gew.-%, bezogen auf die zur Herstellung der Polymerdispersion verwendeten Gesamtmonomerenmenge eines Methylketons der allgemeinen Formel
R¹-C(=O)-CH₃
worin R¹ eine Methyl-, Ethyl-, n-Propyl-, iso-Propyl-, n-Butyl- oder tert.-Butylgruppe ist, und
c) optional katalytische Mengen eines Metallions, das in mehreren Wertigkeitsstufen auftreten kann
umfaßt.

2. Verfahren nach Anspruch 1, **dadurch gekennzeichnet, dass** das anorganische Salz der Perschwefelsäure ein Natrium-, Kalium und/oder Ammoniumsalz ist.

3. Verfahren nach Anspruch 1 oder 2, **dadurch gekennzeichnet, dass** man das anorganische Salz der Perschwefelsäure und das Methylketon der wässrigen Polymerdispersion während der Nachbehandlung gleichzeitig über separate Zuläufe zuführt.

4. Verfahren nach einem der Ansprüche 1 bis 3, **dadurch gekennzeichnet, dass** man die Hauptmenge der Metallionen der wässrigen Polymerdispersion in der Nachbehandlung vor dem anorganischen Salz der Perschwefelsäure und dem Methylketon zusetzt.

5. Verfahren nach einem der Ansprüche 1 bis 4, **dadurch gekennzeichnet, dass** die Gesamtmenge der Metallionen 1 bis 1000 ppm beträgt.

6. Verfahren nach einem der Ansprüche 1 bis 5, **dadurch gekennzeichnet, dass** als Metallionen Eisen-, Kupfer-, Mangan-, Vanadin-, Nickel-, Cobalt-, Titan- Cer-, Chrom- und/oder Silberionen eingesetzt werden.

7. Verfahren nach einem der Ansprüche 1 bis 6, **dadurch gekennzeichnet, dass** die Nachbehandlung in Anwesenheit von Komplexiermitteln durchgeführt wird.

8. Verfahren nach einem der Ansprüche 1 bis 7, **dadurch gekennzeichnet, dass** der pH-Wert der Polymerdispersion während der Nachbehandlung ≥ 2 und ≤ 10 ist.

## Claims

1. A method for reducing the amount of residual monomer in aqueous polymer dispersions by aftertreatment with an initiator system, which comprises aftertreating the aqueous polymer dispersion with addition of an initiator system essentially comprising
a) from 0.001 to 5% by weight, based on the total monomer amount used to prepare the polymer dispersion, of an inorganic salt of persulfuric acid,
b) from 0.005 to 5% by weight, based on the total monomer amount used to prepare the polymer dispersion, of a methyl ketone of the formula
R¹-C(=O) -CH₃
where R¹ is a methyl, ethyl, n-propyl, isopropyl, n-butyl or tert-butyl group, and
c) optionally, catalytic amounts of a metal ion which is able to exist in a plurality of valence states.

2. The method according to claim 1, wherein the inorganic salt of persulfuric acid is a sodium, potassium and/or ammonium salt.

3. The method according to claim 1 or 2, wherein the inorganic salt of persulfuric acid and the methyl ketone are supplied to the aqueous polymer dispersion during the aftertreatment simultaneously by way of separate feeds.

4. The method according to any of claims 1 to 3, wherein the major amount of the metal ions are added to the aqueous polymer dispersion in the aftertreatment prior to the inorganic salt of persulfuric acid and the methyl ketone.

5. The method according to any of claims 1 to 4, wherein the total amount of metal ions is from 1 to 1000 ppm.

6. The method according to any of claims 1 to 5, wherein said metal ions are iron, copper, manganese, vanadium, nickel, cobalt, titanium, cerium, chromium and/or silver ions.

7. The method according to any of claims 1 to 6, wherein the aftertreatment is conducted in the presence of complexing agents.

8. The method according to any of claims 1 to 7, wherein the pH of the polymer dispersion during the aftertreatment is ≥ 2 and ≤ 10.

## Revendications

1. Procédé de réduction de la quantité résiduaire de monomères dans des dispersions aqueuses de polymère par traitement ultérieur avec un système d'amorceur, **caractérisé en ce qu'**on effectue le traitement ultérieur de la dispersion aqueuse de polymère en ajoutant un système d'amorceur qui comporte essentiellement
a) 0,001 à 5 % en poids, par rapport à la quantité totale de monomères utilisée pour la préparation de la dispersion de polymère, d'un sel inorganique de l'acide persulfurique,
b) 0,005 à 5 % en poids, par rapport à la quantité totale de monomères utilisée pour la préparation de la dispersion de polymère, d'une méthylcétone de la formule générale :
R¹-C(=O) -CH₃
dans laquelle R¹ est un groupe méthyle, éthyle, n-propyle, iso-propyle, n-butyle ou tert.butyle, et
c) éventuellement des quantités catalytiques d'un ion métallique qui peut apparaître avec plusieurs valences.

2. Procédé suivant la revendication 1, **caractérisé en ce que** le sel inorganique de l'acide persulfurique est un sel de sodium, de potassium et/ou d'ammonium.

3. Procédé suivant la revendication 1 ou 2, **caractérisé en ce que**, pendant le traitement ultérieur, on alimente simultanément le sel inorganique de l'acide persulfurique et la méthylcétone à la dispersion aqueuse de polymère par l'intermédiaire d'entrées séparées.

4. Procédé suivant l'une des revendications 1 à 3, **caractérisé en ce qu'**on ajoute la quantité principale des ions métalliques à la dispersion aqueuse de polymère dans le traitement ultérieur avant le sel inorganique de l'acide persulfurique et la méthylcétone.

5. Procédé suivant l'une des revendications 1 à 4, **caractérisé en ce que** la quantité totale des ions métalliques est de 1 à 1 000 ppm.

6. Procédé suivant l'une des revendications 1 à 5, **caractérisé en ce que**, comme ions métalliques, on met en oeuvre des ions de fer, cuivre, manganèse, vanadium, nickel, cobalt, titane, cérium, chrome et/ou argent.

7. Procédé suivant l'une des revendications 1 à 6, **caractérisé en ce qu'**on effectue le traitement ultérieur en présence de complexants.

8. Procédé suivant l'une des revendications 1 à 7, **caractérisé en ce que** la valeur de pH de la dispersion de polymère est, pendant le traitement ultérieur, ≥2 et ≤10.
